# EUROPEAN PATENT SPECIFICATION

(11) **EP 2 319 749 B1**
(45) Date of publication and mention of the grant of the patent: **27.01.2016**
(21) Application number: 10190279.9
(22) Date of filing: 05.11.2010
(51) Int. Cl.: B62K 11/04, B62K 25/28, B62M 7/02, F01N 13/00

(54) **An exhaust system for a motorcycle**
Abgassystem für ein Motorrad
Système d'échappement pour motocyclette

(30) Priority: 06.11.2009 IN CH27082009
(43) Date of publication of application: 11.05.2011
(73) Proprietor: Bajaj Auto Limited, Maharashtra (IN)
(72) Inventor: Seger, Olaf, 5320 Mattighofen (AT); Prielinger, Robert, 5320 Mattighofen (AT)
(74) Representative: Lawrence, Richard Anthony

(56) References cited:
- DE-A1- 19 634 887
- DE-A1-102007 006 167
- FR-A3- 2 543 078
- JP-A- S6 138 114
- JP-A- 2009 248 824

## Description

The present invention relates to an exhaust system for a motorcycle.

Regulations require the exhaust system of a motorcycle to include, in addition to silencer components, an exhaust gas cleaner (or catalyser).

For this purpose, known exhaust systems for motorcycles often feature a functional separation in that the exhaust system has two separate housing bodies, one of which houses the exhaust gas cleaner and the other the silencer components. In such a known configuration, both housing bodies must be fitted to the motorcycle. The drawback with this configuration is that it adds considerably to the weight of the motorcycle overall and also increases the packaging volume of the system.

One such configuration is known for example from EP 1 862 652 A1. This known exhaust system comprises a first housing body having a barrelled configuration and extending transversely to the front to rear direction of the motorcycle and located below the connecting area linking the rear wheel swing arm to the motorcycle frame.

This results in the first housing body in the upright direction of the motorcycle extending so far downwardly that the ground clearance of the motorcycle is considerably restricted. The first housing body is connected by an exhaust pipe to a second housing body incorporating the exhaust gas cleaner and needs to be defined by separate supporting fixtures on the frame of the motorcycle. The weight of the two housing bodies considerably adds to the overall weight of the motorcycle and the exposed location of the two housing bodies also exposes the rider to burn injuries if the rider accidentally comes into contact with the housing bodies which are necessarily heated by the hot exhaust gas let alone any reactions - such as catalytic reduction/oxidation - occurring within the exhaust gas cleaner. In addition, this known exhaust system shifts the centre of gravity of the motorcycle, increasing the moment of inertia of the motorcycle against motion about the longitudinal centreline of the vehicle.

A similar exhaust system is known from DE 10 2006 019 388 A1. This known exhaust system is likewise configured as a two-part system and features an expansion chamber below the rear wheel suspension and aft of the engine. Here too, a second housing body incorporating the silencer components is provided and is arranged on the right outside of the longitudinal centreline of the vehicle in a top-down view of the motorcycle and in the front to rear direction and thus has the same drawbacks as already explained above.

A further exhaust system is known from EP 1 772 601 comprising an expansion chamber aft of and below the engine and a second housing body for accommodating the silencer components located sideways from the rear wheel swing arm of the motorcycle.

Known from EP1 975 384 A1 is an exhaust system for a motorcycle featuring an expansion chamber below the engine and additional silencer components in a housing body arranged to one side of the rear wheel swing arm.

This known exhaust system too, has the drawbacks as explained above and has a highly complex structure.

Known from JP 2008 115761 A is a motorcycle featuring an exhaust system with an expansion chamber comprising a catalyst and which is located below a rear wheel swing arm suspension. Here again this known exhaust system has the disadvantage of significantly reducing the ground clearance of the motorcycle fitted therewith. Known from EP 2 075 176 A1 is a motorcycle comprising an exhaust system featuring in turn two separate housing bodies, the first of which comprises a catalyst located below the interface between the rear wheel swing arm and the motorcycle frame and above an exhaust pipe incorporating a second housing body arranged to one side of the rear wheel swing arm. This exhaust system too, shifts the centre of gravity of the motorcycle, reduces the ground clearance and significantly adds to the weight of the motorcycle overall whilst exposing the user of the motorcycle to burns from hot housing bodies.

In conclusion, known from EP 2 048 070 A1 is a motorcycle likewise featuring a two part exhaust system including a first housing body far below the rear wheel swing arm and two second housing bodies each extending rearwards on one side of the rear wheel swing arm.

Another arrangement of the exhaust system is known from so-called supersports motorcycles, likewise featuring two housing bodies, the first of which houses a catalyst and is fluidly communicated by exhaust pipes to a second housing body located below the rider seat and housing the silencer components. An arrangement of this kind causes the exhaust system to add to the overall weight of the motorcycle, shifts the centre of gravity of the motorcycle in the upwards direction, increases the rotational moment of inertia about the longitudinal of the motorcycle and ultimately results in either the rider seat being exposed to the heat or making additional heat deflectors or the like necessary between the seat and the second housing body.

All of the known exhaust systems cited above are not configured in one piece and thus require differing fastener pads on the motorcycle. Irrespective of whether the housing bodies are directly defined on the motorcycle frame or have separate mounts and links, tolerances materialize in fabricating the motorcycle frame and the mounts and links. Tolerances are also involved in fabricating the individual components of the exhaust system, such as, for example, the different housing bodies and their interconnecting exhaust pipes. When the exhaust system is secured to the motorcycle there is the problem of allowable tolerances of the individual components failing to comply with each other, resulting in the exhaust system being fitted strained due to the tension in the components causing premature material fatigue and thus cracks or the like in the exhaust system. In addition, the strained exhaust system has to be supported by the motorcycle frame, exposing it to the resulting reaction forces stemming from the strained exhaust system which, for instance, can result in the links of the exhaust system on the motorcycle frame or the separate mounting pads tending to become cracked. Another exhaust system corresponding to the preamble of claim 1 is disclosed in document JP 2009248824.

It is on the basis of the above considerations that the present invention has the object of eliminating the cited drawbacks by providing an exhaust system for a motorcycle which does not unfavourably shift the centre of gravity of the motorcycle whilst reducing the risk of the rider receiving burn injuries and reducing the stress on the motorcycle frame. Also defined is a motorcycle featuring such an exhaust system.

With such objects in view, the present invention provides an exhaust system for a motorcycle, as in claim 1.

The vertically extending portion of the housing body may be oriented at an angle to a horizontally extending portion of the housing body.

The mounting space may conveniently be defined by the motorcycle frame, the engine and the rear wheel suspension.

The rear wheel suspension may involve mounting the rear wheel of the motorcycle in the rear wheel swing arm, for example, a rear wheel suspension arranged about a full floating axle disposed between two supporting arms of the rear wheel swing arm or also a rear wheel suspension provided with a so-called single-sided swing arm for mounting the rear wheel.

Portions of the housing body oriented in the vertically extending portion, which need not extend precisely vertically or even substantially vertically but even at an angle to the vertical as dictated by packaging constraints, are arranged, at least partially, above a plane encompassing the rear wheel suspension and a bearing assembly of the rear wheel swing arm of the motorcycle. The height of these portions of the housing body above the plane may be greater between the rear wheel suspension and the bearing assembly than the height of the portions below the plane.

The engine may be a supporting (i.e., stressed) or non-supporting (i.e., non-stressed) component of the motorcycle and is located, as viewed in the longitudinal direction of the motorcycle, to the rear of and below a steering head mounting tube of the motorcycle frame. The motorcycle frame may be, for example, of the lattice tube, single loop, double loop, central tube or bridge type, a monocoque structure, or some other type of motorcycle frame.

All of the cited motorcycle frames comprise a support or mount for a seat or saddle surface for the rider and/or passenger.

Generally, the mounting space is defined, at least partially, by the rear side of the engine, rear wheel suspension and proximal tubes of the motorcycle frame. As viewed in the horizontal direction, the support or mount for a seat or saddle surface defines the upper limit of the motorcycle frame so that the mounting space is formed in its broadest sense by the rear side of the engine, the rear wheel suspension and the seat or saddle surface.

The mounting space may include a space to the rear of the rear side of the engine of the motorcycle, below the underside of the seat or saddle surface of the motorcycle and above a plane formed by the swing arm mount and rear wheel suspension. The mounting space is defined by planes oriented on both sides of the seat or saddle surface each parallel to the other, conforming to the seat or saddle surface and mainly at right angles to a surface on which the motorcycle is located upright.

The exhaust system in accordance with the invention comprises, as viewed in the longitudinal direction of the motorcycle, a housing body having a predetermined longitudinally extending portion of predetermined length and, conveniently oriented at right angles thereto, a vertically extending portion of predetermined height. The exhaust system is provided for mounting on the motorcycle so that portions of the housing body oriented in the vertically extending portion are arranged within the mounting space formed between the engine and the motorcycle frame as well as the rear wheel suspension. This now makes it possible to locate the exhaust system practically in the region of the centre of gravity of the motorcycle so as not to cause a shift in the centre of gravity of the motorcycle.

The exhaust system may be substantially completely covered by other components of the motorcycle such as, for example, the supporting arms of the rear wheel swing arm, the frame tubes, covers of the motorcycle frame, and the like, when the exhaust system is arranged as intended on the motorcycle. Such an arrangement helps to ensure that the rider or passenger does not accidentally come into contact with hot housing components of the housing body thus causing injury.

This configuration also achieves, unlike the prior art exhaust systems as described above, prevents the restriction of the ground clearance of the motorcycle and negative effects on the rotational moment of inertia about the longitudinal axis of the motorcycle. This is because the housing body of the exhaust system, as a relatively heavy component on the motorcycle, is centrally arranged in the region of the centre of gravity of the motorcycle and thus has no negative effect on the handling of the vehicle.

Advantageously, substantial portions of the housing body may be oriented at an angle to the longitudinal direction of the motorcycle so that the housing body extends upwardly or vertically in the mounting space formed between the engine and the motorcycle frame as well as the rear wheel suspension and not, as is the case in known exhaust systems, in the longitudinal direction of the vehicle.

Portions of the housing body oriented in the upright extension may be arranged above a plane encompassing the rear wheel suspension and a bearing assembly of the rear wheel swing arm on the motorcycle, meaning, in other words, that a virtual plane between the rear wheel suspension and a bearing assembly of the rear wheel swing arm on the motorcycle represents a plane above which plane the portions of the housing body are oriented in the vertically extending portion. In this arrangement, the rear wheel swing arm can be mounted on the motorcycle frame or in the engine housing when the engine is configured self-supporting or partly supporting. When the motorcycle is negotiating a level road or surface, the plane covered between the bearing assembly of the rear wheel swing arm on the motorcycle and the rear wheel suspension is parallel to or at an angle to the road surface. In known exhaust systems, the first housing body is customarily arranged below this plane whilst vertically extending or upright portions of the housing body of the exhaust system in accordance with the present invention are now arranged above this plane.

This results in substantial portions of the housing body, oriented in the vertically extending portion, being located above this plane and thus in the direct vicinity of the centre of gravity of the motorcycle. This configuration ensures that the housing body also has adequate volume to house the silencer components and an exhaust gas cleaner in the form of, for example, a catalyst without making it necessary to fit a second housing body to the motorcycle, for instance serving to house the silencer components as is the case with known exhaust systems.

The mounting space may be formed between the engine and the motorcycle frame as well as a support for the rear wheel swing arm oriented transversely or at an angle to the rear wheel suspension. When the motorcycle to be fitted with the exhaust system in accordance with the invention has a so-called single-sided swing arm, this often comprises a support which, as viewed in the longitudinal direction of the vehicle, extends left to right or vice-versa and is thus at an angle to the rear wheel suspension of the rear wheel swing arm.

In such a configuration, the mounting space is formed between this angled support of the rear wheel swing arm and the engine as well as the motorcycle frame. When the motorcycle has a rear wheel swing arm having two supporting arms oriented in the front to rear direction of the motorcycle, such a swing arm often includes a transverse stiffening support arranged at an angle of 90° or also at a smaller angle to the rear wheel suspension. In such a configuration the mounting space is provided between the engine and the motorcycle frame as well as the transverse support.

In another aspect of the invention it is provided for that the height of the portions of the housing body oriented in the vertically extending portion above a plane defining the mounting space in the direction of a road surface is greater between the rear wheel suspension and a bearing assembly of the rear wheel swing arm on the motorcycle than the height of the portions of the housing body oriented in the vertically extending portion below this plane. It is in this way that the exhaust system achieves an adequate volume for the arrangement of expansion chambers as well as a catalyst and silencer components in the form of absorption and/or reflection components as well as sitting at least substantial portions of the exhaust system near to the centre of gravity of the motorcycle. The catalyst is advantageously located near to the centre of gravity, resulting in a very short exhaust pipe from the engine to the catalyst in thus quickly attaining the operating temperature required for efficient cleaning of the exhaust gas by the catalyst.

The housing body of the exhaust system may be double-shelled, i.e. comprising a structure of inner walls within the structure forming the outer walls, the inner walls being arranged spaced away from the outer walls in ensuring the configuration of a stiff housing body which reduces the structure-borne noise emitted by the housing body, it itself having little tendency to vibrate due to the pulsating mass flow of the exhaust gas. The double-shelled structure will also reduce heat radiated by the outer surface of the housing.

In this arrangement, the housing body may comprise a first partial body oriented in the vertically extending portion and a second partial body oriented in the longitudinal extending portion, as a result of which the total volume of the housing body can be adapted to any particularly application, for instance corresponding to the swept volume of the engine.

The surface connecting the first and second partial bodies as viewed in the longitudinal direction of the motorcycle may be arranged below the plane encompassing the rear wheel suspension and the bearing assembly of the rear wheel swing arm, creating sufficient freedom of movement of the second partial body oriented in the longitudinal extension without it coming up against the rear wheel swing arm.

The exhaust system, as viewed in the longitudinal direction of the motorcycle, may feature curved surfaces at least section-wise at a front and/or rear side, making it possible, for example, that the rear side of the exhaust system configured by the curved surfaces creates a portion with clearance from and freedom of movement as needed for a transverse support of the rear wheel swing arm.

The housing body may comprise a cross-sectional surface varying in a vertical direction, for example triangular, rectangular or featuring more than four corners, achieving, for example, by an expanding cross-sectional surface an increase in volume for the exhaust pipe of the exhaust gas in simultaneously making available adequate volume to mount the silencer components.

In still another aspect of the invention, the housing body may comprise in the longitudinal direction of the motorcycle, an exhaust gas inlet arranged at the front or side and an exhaust gas outlet arranged at side or rear. In this arrangement the exhaust gas inlet is advantageously arranged at the top of the housing body, in other words above the plane formed by the bearing assembly of the rear wheel swing arm on the motorcycle and rear wheel suspension, whilst the exhaust gas outlet is arranged below this plane. In accordance with an advantageous embodiment both the exhaust gas inlet and the exhaust gas outlet are arranged on the side so that the exhaust pipe communicating the exhaust gas from the engine to the housing body can be configured with short length so that the exhaust gas temperature in entering the housing body is high to quickly attain a temperature sufficient to fire the catalyst whilst, on the one hand, decompressing the exhaust gas sideways into the surroundings without coming into contact with the rear wheel tire of the motorcycle.

In this arrangement the catalyst is arranged in the direction of flow of the exhaust gas in the vicinity of the exhaust gas inlet. The catalyst may be sited in this arrangement in a first chamber of the housing body providing fluid communication to a second and third chamber such that the exhaust gas can be streamed from the first chamber into the second chamber and/or third chamber and from there decompressed into the surroundings. The mass flow of the exhaust gas communicated into the second and/or third chamber in this arrangement can by tweaked by means for setting the mass flow, such as, for instance, pin-hole apertures.

The housing body is mounted on the motorcycle frame by tabs or links which isolate it from vibration and stress. The mounts also allow mounting of the housing body in close proximity to the engine such that unavoidable tolerances no longer communicate the stresses acting on the motorcycle frame, due to fitting of the exhaust system, to the housing body. This is now possible due to the short distance between the engine and the exhaust system in fabricating the exhaust system respectively the motorcycle frame and the location of the components relative to one another.

The invention also provides a motorcycle incorporating an exhaust system as described above. In this arrangement the exhaust system is fluidly communicatingly connected to advantage by means of an exhaust pipe oriented within the outer dimensions of the motorcycle. This configuration now makes it possible that the user of the motorcycle is no longer exposed to the risk of accidentally coming into contact with components hot from the flow of exhaust gas.

The configuration in accordance with the invention of the exhaust system now makes it possible to site it in the region of the centre of gravity of the motorcycle so as exert no negative effect by a serious shift in the centre of gravity whilst maintaining the frame of the motorcycle practically free of stresses by sitting the exhaust system in the region of the centre of gravity by means of resilient fasteners.

A preferred embodiment of the exhaust system of the invention will now be detailed with reference to the drawings in which:
FIG. 1 is a side view in perspective of one embodiment of an exhaust system for a motorcycle including a motorcycle frame, an engine as well as a rear wheel swing arm;
FIG. 2 is a view in perspective in the components as shown in FIG. 1;
FIG. 3 is partial section view of the exhaust system as shown in FIG. 1 and FIG. 2;
FIG. 4 is a view in perspective of the exhaust system as shown in FIG. 1 and FIG. 2;
FIG. 5 is a view in perspective of one embodiment of a motorcycle in accordance with the invention.
FIG. 6 is a partial section view of an exhaust system housing body alternative to that illustrated in FIGS. 1 to 5.
FIG. 7 is a view in perspective of a motorcycle including the exhaust system housing body shown in FIG. 6.

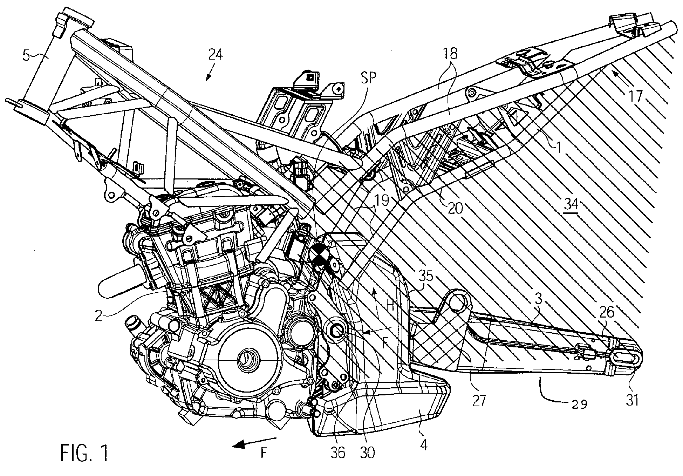

Referring now to FIG. 1 there is illustrated a motorcycle frame 1 engineered as a lattice tube frame, an engine 2, a rear wheel swing arm 3 and an exhaust system 4 in accordance with one embodiment of the present invention.

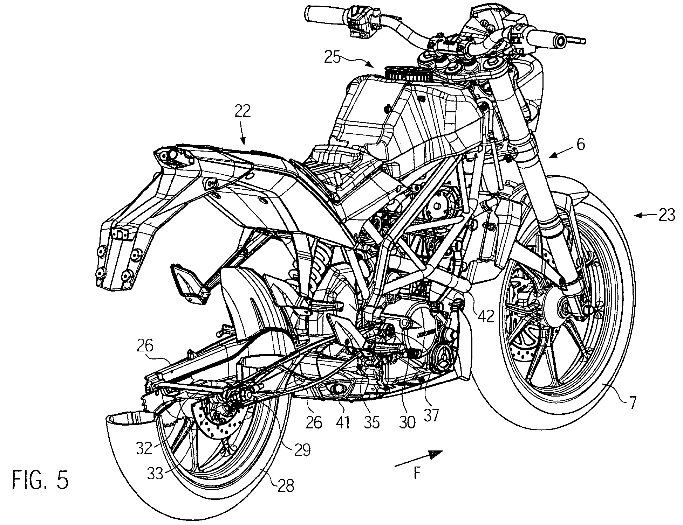

For a better view of the exhaust system 4 several struts and tubes of the frame 1 have been omitted. This lattice tube frame features a steering head mounting tube 5 mounting rolling contact bearing assemblies (not shown) for swivel mounting a front wheel fork 6 shown in more detail in FIG. 5 and serving as the suspension of the front wheel 7.

Extending to the rear from steering head mounting tube 5 are the two main tubes 8, 9 of the frame defining a plurality of frame struts 10, 11, 12, 13 forming with the main frame tubes 14, 15 likewise extending from the steering head mounting tube 5 in the direction of a lower frame extension arm 16 a composite lattice structure representing, in the embodiment as shown, the motorcycle frame 1.

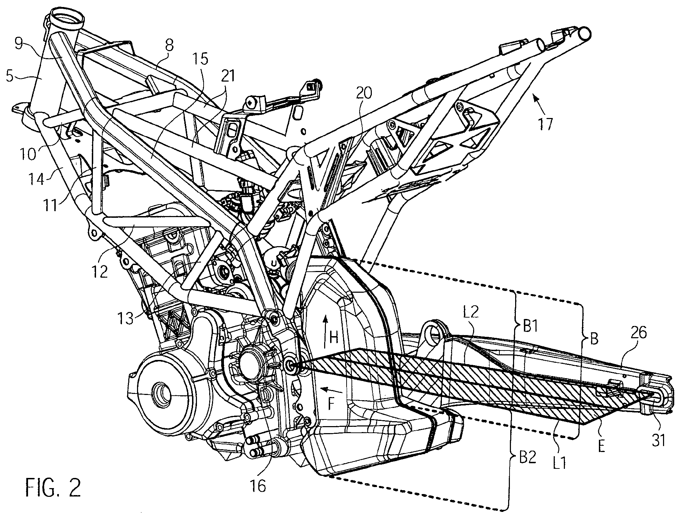

As is directly evident from FIGs. 1 and 2 of the drawing the lattice tube frame features in the region of the rear portion of the frame 17, two upper main frame tubes 18 as well as two lower main frame tubes 19 between which frame struts 20 are arranged. The upper frame main tubes 18 and lower main frame tubes 19 are arranged parallel along a portion of their length. Frame struts 20 are arranged to form a triangulated configuration of the lattice type frame.

Referring now to FIG. 2 of the drawing there is illustrated in addition frame struts 21 connecting the upper main tubes 8, 9 of the frame to the rear upper frame main tubes 18.

The rear frame 17 serves to mount a seat surface 22 shown in detail in FIG. 5 for the rider and/or passenger of the motorcycle 23 and the portion 24 of the lattice tube frame 1 facing the steering head mounting tube 5 serves to mount the fuel tank 25 as shown in FIG. 5.

The engine 2 as shown in the preferred embodiment is a four-stroke single engine, but any other engine working as a two-stroke or four-stroke engine may find application on the motorcycle in accordance with the invention.

As evident from the drawings, the engine 2 is arranged below the upper main tubes 8, 9 of the frame and at least partially within the lower main frame tubes 14, 15. In the illustrated embodiment, the rear wheel swing arm 3 of the frame - as evident in more detail from FIG. 5 - involves a rear wheel swing arm 3 configured with two longitudinally supporting arms 26 - only one of which as evident from in each FIG. 1 and FIG. 2 - connected via a transverse support 27 evident in more detail in FIG. 1 and FIG. 2.

The rear wheel swing arm 3 comprises a rear wheel suspension 29 mounting a rear wheel 28 and is defined to swivel via a swing arm bearing assembly 30 on the lattice tube frame 1.

FIGs. 1 and 2 of the drawing show a mount 31 for the rear wheel swing arm 3 via which a full floating axle 32, shown in more detail in FIG. 5, can be inserted through the two supporting arms 26 and locked in place by a nut 33. This results in the suspension of the rear wheel 28 in the rear wheel swing arm as shown in this embodiment via the full floating axle 32 and the chain tensioning elements supported by the supporting arms 26.

Where the alternative embodiment relates to a motorcycle powering the rear wheel by a Cardan shaft, the rear wheel can be releasably defined at a wheel drive connected to an arm supporting the rear wheel swing arm, the wheel drive in such an embodiment simultaneously acting as the rear wheel suspension.

As directly evident from the drawing, the exhaust system 4 is arranged in a mounting space 34, depicted shaded in FIG. 1, formed between engine 2, rear wheel swing arm 3 and the rear wheel suspension 29.

The exhaust system 4 comprises a housing body 35 which, as viewed in the longitudinal direction of the motorcycle 23, indicated by the arrow F, has a longitudinally extending portion of predetermined length and a vertically extending portion having a and has a certain height as indicated by the arrow H.

As evident particularly from FIG. 2 of the drawings, a substantial portion B of the housing body 35 extends in the vertical direction H within the mounting space 34 formed by the motorcycle frame 1, engine 2 and rear wheel swing arm 3.

FIG. 2 of the drawing shows how a link L1 links the left hand swinging fulcrum 36, as observed on the left in the longitudinal direction F, to the center of the mount 31 of the supporting arms 26 of the rear wheel swing arm 3. A link L2 in a similar way and again as shown in FIG. 2 links the centre of the mount 31 of the supporting arms 26 to the right hand swinging fulcrum 37 in the longitudinal direction. Both links L1 and L2 cover a plane E depicted shaded in FIG. 2 encompassing the rear wheel suspension 29 and the swing arm bearing assembly 30.

As is directly evident from FIG. 2 of the drawing a substantial portion B1 of the housing body 35 of the exhaust system 4 extending in the vertical direction H is located above the plane E. Referring now to FIG. 1 of the drawing again there is illustrated from the location of the centre of gravity SP of the motorcycle 23 how the exhaust system 4 is now arranged in the region of the centre of gravity SP and not, as in known exhaust systems, totally below the rear wheel swing arm 3 and thus distanced far from the centre of gravity SP of the motorcycle 23.

This results in portions of the housing body 35 of the exhaust system 4 located in the vertical direction now being within the mounting space 34, as described above, and a substantial portion B1 is oriented above the plane E encompassing the rear wheel suspension 29 and the swing arm bearing assembly 30. FIG. 2 also shows a portion B2 of the housing body extending in the vertical direction below the plane E. In the example embodiment as shown, the portion B1 owns a larger extension in the vertical direction than the portion B2.

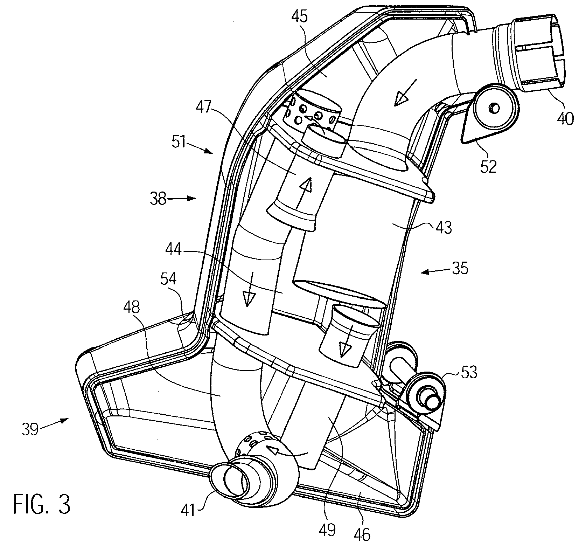

Referring now to FIG. 3 there is illustrated, in more detail, how the housing body 35 comprises a partial body 38 extending in the vertical direction, H, and a partial body 39 oriented in the direction of the portion extending longitudinally in direction F. In this arrangement the extent of the first partial body 38 in the direction of the upright extension H is greater than its extent in the direction of the longitudinal extension or front to rear direction F. On the other hand, the extent of the second partial body 39 in the longitudinal direction F is greater than its extent in the vertical direction H. The first partial body 38 in this arrangement has a greater inner volume than that of the second partial body 39. It may be observed that the second partial body 39, as viewed in the longitudinal direction of the motorcycle 23 has tapered configuration.

Both partial bodies 38, 39 form together the housing body 35 which has greater extent in the vertical than its extent in the longitudinal direction F.

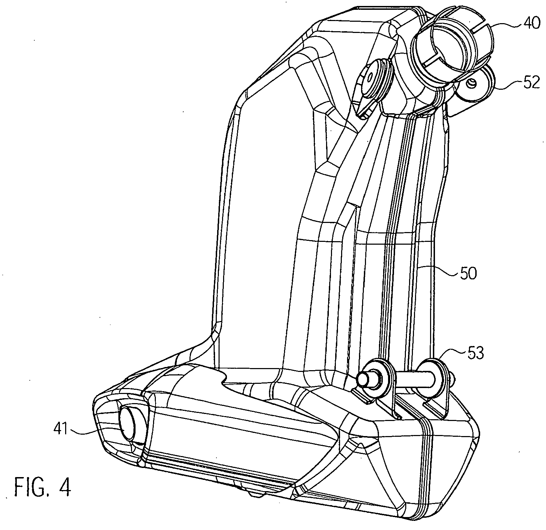

Referring now to FIGS. 3 and 4 of the drawings there is illustrated how the housing body 35 includes as viewed in the longitudinal direction F of the motorcycle 23 an exhaust gas inlet 40 oriented to the side and front as well as an exhaust gas outlet 41 oriented to the side and rear. The exhaust gas inlet 40 fluidly communicates with the engine 2 by means of an exhaust pipe 42 located within the outer dimensions of the motorcycle 23 - see FIG. 5 - so that the exhaust gas originating in the engine 2 is able to enter via the exhaust pipe 42 and the exhaust gas inlet 40 into the interior of the housing body 35.

Arranged in the vicinity of the exhaust gas inlet 40 is a catalyst 43 within a first chamber 44 of the housing body 35 of the exhaust system. In this embodiment of the exhaust system, a partial stream of the cleaned exhaust gas can flow from the first chamber 44 via a pipe 47 into a second chamber 45 where it can flow via a pipe 48 perforated in the region of the flow inlet in the direction of the exhaust gas outlet 41.

A partial stream of the exhaust gas can flow via a pipe 49 from the first chamber 44 into the third chamber 46 where it enters via a portion of the exhaust pipe 48 provided with ports by which it is communicated further in the direction of the exhaust gas outlet 41. In this way, by correspondingly altering the porting cross-sections of the exhaust gas inlet ports 40 into the pipe 48, the emission noise response of the engine 2 can be adjusted as required.

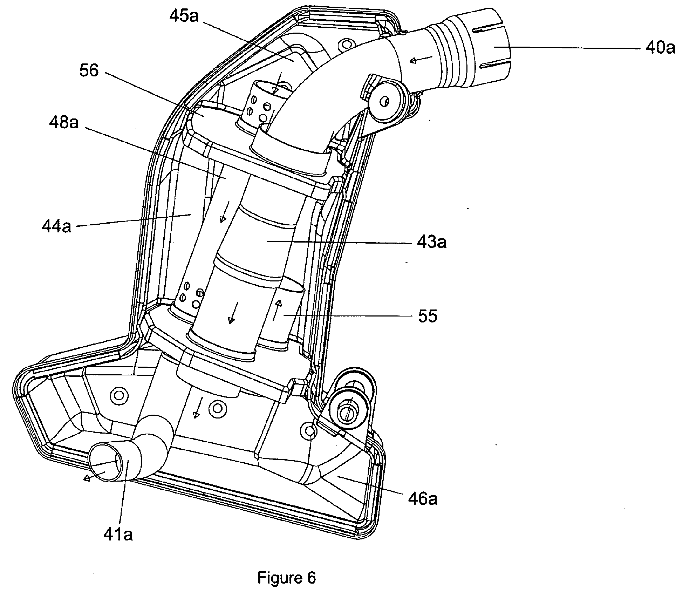

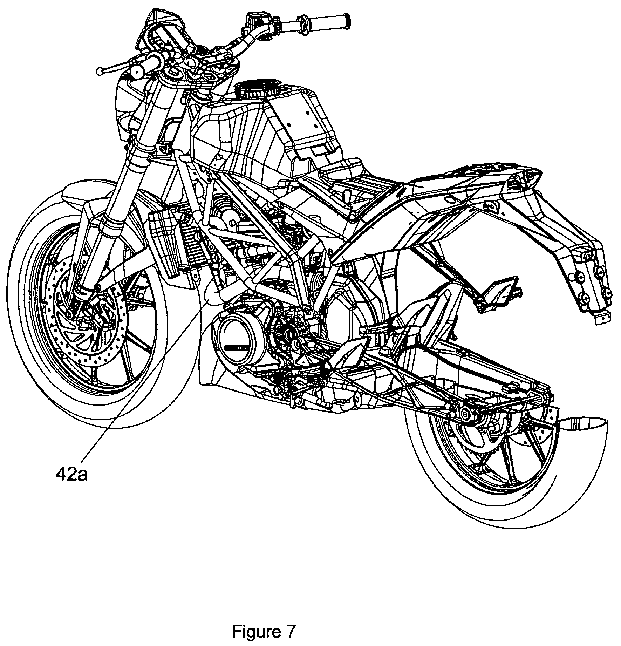

FIGS. 6 and 7 of the drawings show an alternative to the above described housing body. The alternative housing body 35 includes, as viewed in the longitudinal direction F of the motorcycle 23, an exhaust gas inlet 40a oriented to the side and front as well as an exhaust gas outlet 41 a oriented to the side and rear. The exhaust gas inlet 40a fluidly communicates with the engine 2 by means of an exhaust pipe 42a located within the outer dimensions of the motorcycle 23 - see FIG. 7 - so that the exhaust gas originating in the engine 2 is able to enter via the exhaust pipe 42a and the exhaust gas inlet 40a into the interior of the housing body 35.

Arranged in the vicinity of the exhaust gas inlet 40a is a catalyst 43a within a first chamber 46a of the housing body 35 of the exhaust system. In this embodiment of the exhaust system, a stream of the cleaned exhaust gas can flow from the first chamber 46a via a pipe 55 into a second chamber 44a where it can flow via a clearance between baffle 56 and inlet pipe 40a in the third chamber 45a and then in the region of the flow inlet in the direction of the exhaust gas outlet 41 a through pipe 48a.

As evident from FIG. 1, FIG. 3 and FIG. 4 of the drawings, the housing body 35 is fronted by surfaces 50 curved at least section-wise to take into account the location of the housing body 35 and the swing arm bearing assembly 30. The rear side 51 too, of the housing body 35 is configured curved at least section-wise so that a clearance is created for the transverse support 27 of the rear wheel swing arm 3 ensuring that the transverse support 27 does not come into contact with the rear side 51 of the housing body 35 in swinging action of the rear wheel swing arm 3 at the swing arm bearing assembly 30, it instead remaining clear thereof.

As is particularly evident from FIG. 3 of the drawing the housing body 35 has in the direction of the upright extension H a cross-sectional surface flared top-down to provide adequate volume for silencing the exhaust.

The partial body 39 comprises, as viewed in the front to rear direction F of the motorcycle, as of widest location located roughly in the region of the exhaust gas outlet 41 a tapered portion in the front to rear direction likewise serving to provide adequate volume of the housing body 35 to accommodate the silencer components. The silencer components may involve matted or knitted fibre serving to silence the roar of the engine 2 or reflection components or a combination of both.

Referring now to FIGS. 3 and 4, there is illustrated how the housing body 35 is fronted by respective upper tabs and lower tabs 53 for defining links between the housing body 35 and the motorcycle frame 1 by means of elastic components disposed there-between to isolate vibration of the housing body 35 from the motorcycle frame 1 whilst ensuring that the housing body 35 is releasable with minimal stress on the motorcycle frame 1. Assembly stress transfer to the motorcycle frame 1 when fitting the housing body 35 is also minimised in this way.

Referring now to FIG. 5 of the drawings there is illustrated how the exhaust system 4 and its housing body 35 is arranged within the outer dimensions of the motorcycle 23 and within the mounting space 34 so that when the motorcycle 23 is used, as it should be, the user cannot come into contact with the hot housing body 35 or exhaust pipe 42.

The exhaust system 4 is arranged, so high in the vertical direction of the motorcycle 23, corresponding to the direction of the upright extension H of the housing body 35 within the structure of the motorcycle 23, that the motorcycle 23 has high ground clearance and thus also high side-tilting freedom. Arranging the exhaust system more or less completely in the region of the centre of gravity SP of the motorcycle 23 also results in the exhaust system 4 no longer having a negative effect on handling the motorcycle 23, it more specifically not negatively influencing the rotational moment of inertia about the longitudinal centreline of the motorcycle.

The exhaust system 4 and, more particularly, the housing body 35 is suspended freely oscillating on the motorcycle 23 by elastic members so not communicating stress to the motorcycle frame 1 even when stress occurs otherwise as induced by the exhaust system being thermally displaced.

Modifications and variations to the exhaust system of the present invention may be apparent to the skilled reader of this disclosure. Such modifications and variations are deemed within the scope of the present invention.

## Claims

1. An exhaust system (4) for a motorcycle, said motorcycle comprising an engine (2), a motorcycle frame (1) and a rear wheel assembly, said wheel essembly comprising a swing arm, a rear wheel suspension and a rear wheel, the exhaust system (4) comprising a housing body (35) with at least one chamber (44, 45, 46) and having a vertically extending portion (38) wherein the vertically extending portion (38) of the housing body (35) is arranged within a mounting space (34) formed between the engine (2) and the rear wheel assembly **characterised in that** said vertically extending portion (38) of said housing body (35) has a portion arranged above a plane (E) encompassing said rear wheel suspension (29) and a bearing assembly (30) of the rear wheel swing arm (3) of the motorcycle (23).

2. An exhaust system (4) as claimed in claim 1 wherein said vertically extending portion (38) of said housing body (35) extends at an angle to the vertical.

3. An exhaust system (4) as claimed in claim 1 wherein said vertically extending portion (38) of said housing body is oriented at an angle to a horizontally extending portion of said housing body.

4. An exhaust system (4) as claimed in any one of the preceding claims wherein said mounting space (34) is defined, at least partially, by the rear side of the engine (2), the rear wheel suspension (29) and proximal tubes of the motorcycle frame (1).

5. An exhaust system (4) as claimed in claim 4 wherein said mounting space (34) includes a space to the rear side of the engine (2) of the motorcycle 23, below the underside of the seat or saddle surface (22) of the motorcycle and above a plane formed by the swing arm mount (31) and the rear wheel suspension (29).

6. An exhaust system (4) as claimed in claim 5 wherein said mounting space (34) is defined by planes oriented on both sides of the seat or saddle surface (22) each parallel to the other, conforming to the seat or saddle surface and mainly at right angles to a surface on which the motorcycle (23) is located upright.

7. An exhaust system (4) as claimed in any one of the preceding claims being located in the region of a centre of gravity (SP) of the motorcycle (23).

8. An exhaust system (4) as claimed in any one of the preceding claims wherein a substantial portion of the housing body (35) is oriented at an angle to a longitudinal direction of the motorcycle so that the housing body (35) extends upwardly in the mounting space (34) formed between the engine (2) and the motorcycle frame (1) as well as the rear wheel suspension (29).

9. An exhaust system (4) as claimed in any one of the preceding claims wherein said housing body (35) is double-shelled comprising a structure of inner walls within the structure forming the outer walls, the inner walls being arranged spaced away from the outer walls.

10. An exhaust system (4) as claimed in any one of the preceding claims wherein said housing body (35) has cross-sectional surface varying in a vertical direction providing a volume for the exhaust pipe (42) and a volume to mount the silencer components.

11. An exhaust system (4) as claimed in any one of the preceding claims wherein an exhaust gas inlet (40) is arranged at the top of the housing body (35) above the plane 'E'formed by the bearing assembly of the rear wheel swing arm (3) on the motorcycle (23) and rear wheel suspension (29) and an exhaust gas outlet (41) is arranged below the plane (E).

12. An exhaust system (4) as claimed in claim 11 wherein said exhaust gas inlet (40) and said exhaust gas outlet (41) are arranged on the side of the housing body (35).

13. An exhaust system (4) as claimed in any one of the preceding claims wherein said housing body (35) includes an exhaust gas inlet (40a) oriented to the side and front and an exhaust gas outlet (41 a) oriented to the side and rear.

14. An exhaust system (4) as claimed in any one of the preceding claims including a catalyst (43) located at or near to the centre of gravity (SP) of the motorcycle (23).

15. An exhaust system (4) as claimed in any one of the preceding claims wherein catalyst (43) arranged in the direction of flow of the exhaust gas in the vicinity of the exhaust gas inlet (40), is located in a first chamber (44) of the housing body (35) providing fluid communication to a second and third chamber (45,46) of the housing body (35) such that the exhaust gas can be streamed from the first chamber (44) into the second chamber (45) and/or third chamber (46) and from there decompressed into the surroundings.

16. An exhaust system (4) as claimed in claim 1, wherein said mounting space (34) is defined by the motorcycle frame (1), the engine (2) and the rear wheel suspension (29).

## Patentansprüche

1. Auspuffanlage (4) für ein Motorrad, wobei das Motorrad Folgendes umfasst: einen Motor (2), einen Motorradrahmen (1) und eine Hinterradanordnung, wobei die Radanordnung einen Schwingarm, eine Hinterradaufhängung und ein Hinterrad umfasst, wobei die Auspuffanlage (4) einen Gehäusekörper (35) mit wenigstens einer Kammer (44, 45, 46) umfasst und einen sich vertikal erstreckenden Abschnitt (38) aufweist, wobei der sich vertikal erstreckende Abschnitt (38) des Gehäusekörpers (35) in einem Montageraum (34), der zwischen dem Motor (2) und der Hinterradanordnung gebildet ist, angeordnet ist, **dadurch gekennzeichnet, dass** der sich vertikal erstreckende Abschnitt (38) des Gehäusekörpers (35) einen Abschnitt aufweist, der über einer Ebene (E) angeordnet ist, die die Hinterradaufhängung (29) und eine Lageranordnung (30) des Hinterradschwingarms (3) des Motorrads (23) umgibt.

2. Auspuffanlage (4) nach Anspruch 1, wobei der sich vertikal erstreckende Abschnitt (38) des Gehäusekörpers (35) in einem Winkel zur Vertikale erstreckt.

3. Auspuffanlage (4) nach Anspruch 1, wobei der sich vertikal erstreckende Abschnitt (38) des Gehäusekörpers in einem Winkel zu einem sich horizontal erstreckenden Abschnitt des Gehäusekörpers ausgerichtet ist.

4. Auspuffanlage (4) nach einem der vorhergehenden Ansprüche, wobei der Montageraum (34) zumindest teilweise durch die Rückseite des Motors (2), die Hinterradaufhängung (29) und proximale Rohre des Motorradrahmens (1) definiert ist.

5. Auspuffanlage (4) nach Anspruch 4, wobei der Montageraum (34) einen Raum auf der Rückseite des Motors (2) des Motorrads (23), unter der Unterseite der Sitz- oder Satteloberfläche (22) des Motorrads und über einer Ebene, die durch die Schwingarmhalterung (31) und die Hinterradaufhängung (29) gebildet ist, beinhaltet.

6. Auspuffanlage (4) nach Anspruch 5, wobei der Montageraum (34) durch Ebenen definiert ist, die auf beiden Seiten der Sitz- oder Satteloberfläche (22) jeweils parallel zur anderen, der Sitz- oder Satteloberfläche entsprechend und hauptsächlich in rechten Winkeln zu einer Oberfläche, auf der sich das Motorrad (23) aufrecht befindet, ausgerichtet sind.

7. Auspuffanlage (4) nach einem der vorhergehenden Ansprüche, die sich im Bereich eines Schwerpunkts (SP) des Motorrads (23) befindet.

8. Auspuffanlage (4) nach einem der vorhergehenden Ansprüche, wobei ein erheblicher Abschnitt des Gehäusekörpers (35) in einem Winkel zu einer Längsrichtung des Motorrads ausgerichtet ist, sodass sich der Gehäusekörper (35) im Montageraum (34), der zwischen dem Motor (2) und dem Motorradrahmen (1) sowie der Hinterradaufhängung (29) gebildet ist, aufwärts erstreckt.

9. Auspuffanlage (4) nach einem der vorhergehenden Ansprüche, wobei der Gehäusekörper (35) doppelschalig ist und eine Struktur von Innenwänden in der die Außenwände bildenden Struktur umfasst, wobei die Innenwände in einem Abstand von den Außenwänden angeordnet sind.

10. Auspuffanlage (4) nach einem der vorhergehenden Ansprüche, wobei der Gehäusekörper (35) eine Querschnittsoberfläche aufweist, die in einer vertikalen Richtung variiert und ein Volumen für das Auspuffrohr (42) und ein Volumen zum Anbringen der Schalldämpferkomponenten bereitstellt.

11. Auspuffanlage (4) nach einem der vorhergehenden Ansprüche, wobei ein Abgaseinlass (40) oben auf dem Gehäusekörper (35) über der Ebene "E", die durch die Lageranordnung des Hinterradschwingarms (3) am Motorrad (23) und der Hinterradaufhängung (29) gebildet ist, angeordnet ist und ein Abgasauslass (41) unter der Ebene (E) angeordnet ist.

12. Auspuffanlage (4) nach Anspruch 11, wobei der Abgaseinlass (40) und der Abgasauslass (41) auf der Seite des Gehäusekörpers (35) angeordnet sind.

13. Auspuffanlage (4) nach einem der vorhergehenden Ansprüche, wobei der Gehäusekörper (35) einen Abgaseinlass (40a), der zur Seite und nach vorn ausgerichtet ist, und einen Abgasauslass (41 a), der zur Seite und nach hinten ausgerichtet ist, beinhaltet.

14. Auspuffanlage (4) nach einem der vorhergehenden Ansprüche, beinhaltend einen Katalysator (43), der sich am Schwerpunkt (SP) des Motorrads (23) oder nahe davon befindet.

15. Auspuffanlage (4) nach einem der vorhergehenden Ansprüche, wobei der Katalysator (43) in der Richtung der Strömung des Abgases in der Nähe des Abgaseinlasses (40) angeordnet ist, sich in einer ersten Kammer (44) des Gehäusekörpers (35) befindet, Fluidverbindung zu einer zweiten und einer dritten Kammer (45, 46) des Gehäusekörpers (35) bereitstellt, sodass das Abgas von der ersten Kammer (44) in die zweite Kammer (45) und/oder die dritte Kammer (46) geleitet werden kann und von dort in die Umgebung dekomprimiert werden kann.

16. Auspuffanlage (4) nach Anspruch 1, wobei der Montageraum (34) durch den Motorradrahmen (1), den Motor (2) und die Hinterradaufhängung (29) definiert ist.

## Revendications

1. Système d'échappement (4) pour motocyclette, ladite motocyclette comprenant un moteur (2), un cadre de motocyclette (1) et un ensemble de roue arrière, ledit ensemble de roue comprenant un bras oscillant, une suspension de roue arrière et une roue arrière, le système d'échappement (4) comprenant un corps de carter (35) doté d'au moins une chambre (44, 45, 46) et ayant une partie s'étendant verticalement (38) dans lequel la partie s'étendant verticalement (38) du corps de carter (35) est agencée au sein d'un espace de montage (34) formé entre le moteur (2) et l'ensemble de roue arrière, **caractérisé en ce que** ladite partie s'étendant verticalement (38) dudit corps de carter (35) comporte une partie agencée au-dessus d'un plan (E) englobant ladite suspension de roue arrière (29) et un ensemble de palier (30) du bras oscillant de roue arrière (3) de la motocyclette (23).

2. Système d'échappement (4) selon la revendication 1, dans lequel ladite partie s'étendant verticalement (38) dudit corps de carter (35) s'étend selon un angle par rapport à la verticale.

3. Système d'échappement (4) selon la revendication 1, dans lequel ladite partie s'étendant verticalement (38) dudit corps de carter est orientée selon un angle par rapport à une partie s'étendant horizontalement dudit corps de carter.

4. Système d'échappement (4) selon l'une quelconque des revendications précédentes, dans lequel ledit espace de montage (34) est défini, au moins partiellement, par le côté arrière du moteur (2), la suspension de roue arrière (29) et des tubes proximaux du cadre de motocyclette (1).

5. Système d'échappement (4) selon la revendication 4, dans lequel ledit espace de montage (34) comporte un espace vers le côté arrière du moteur (2) de la motocyclette (23), en dessous du dessous de la surface de siège ou selle (22) de la motocyclette et au-dessus d'un plan formé par le support de bras oscillant (31) et la suspension de roue arrière (29).

6. Système d'échappement (4) selon la revendication 5, dans lequel ledit espace de montage (34) est défini par des plans orientés des deux côtés de la surface de siège ou selle (22), chacun étant parallèle à l'autre, se conformant à la surface de siège ou selle et principalement selon des angles droits par rapport à une surface sur laquelle la motocyclette (23) est située verticalement.

7. Système d'échappement (4) selon l'une quelconque des revendications précédentes, situé dans la région d'un centre de gravité (SP) de la motocyclette (23).

8. Système d'échappement (4) selon l'une quelconque des revendications précédentes, dans lequel une partie substantielle du corps de carter (35) est orientée selon un angle par rapport à une direction longitudinale de la motocyclette de telle sorte que le corps de carter (35) s'étende vers le haut dans l'espace de montage (34) formé entre le moteur (2) et le cadre de motocyclette (1) ainsi que la suspension de roue arrière (29).

9. Système d'échappement (4) selon l'une quelconque des revendications précédentes, dans lequel ledit corps de carter (35) est à double enveloppe comprenant une structure de parois internes au sein de la structure formant les parois externes, les parois internes étant agencées espacées des parois externes.

10. Système d'échappement (4) selon l'une quelconque des revendications précédentes, dans lequel ledit corps de carter (35) a une surface en coupe variant dans une direction verticale fournissant un volume pour le tuyau d'échappement (42) et un volume pour monter les composants de silencieux.

11. Système d'échappement (4) selon l'une quelconque des revendications précédentes, dans lequel une admission de gaz d'échappement (40) est agencée au niveau d'une partie haute du corps de carter (35) au-dessus du plan « E » formé par l'ensemble de palier du bras oscillant de roue arrière (3) de la motocyclette (23) et la suspension de roue arrière (29) et une sortie de gaz d'échappement (41) est agencée en dessous du plan (E).

12. Système d'échappement (4) selon la revendication 11, dans lequel ladite admission de gaz d'échappement (40) et ladite sortie de gaz d'échappement (41) sont agencées sur le côté du corps de carter (35).

13. Système d'échappement (4) selon l'une quelconque des revendications précédentes, dans lequel ledit corps de carter (35) comporte une admission de gaz d'échappement (40a) orientée vers le côté et l'avant et une sortie de gaz d'échappement (41 a) orientée vers le côté et l'arrière.

14. Système d'échappement (4) selon l'une quelconque des revendications précédentes, comportant un catalyseur (43) situé au niveau ou près du centre de gravité (SP) de la motocyclette (23).

15. Système d'échappement (4) selon l'une quelconque des revendications précédentes, dans lequel le catalyseur (43) agencé dans la direction d'écoulement du gaz d'échappement à proximité de l'admission de gaz d'échappement (40) est situé dans une première chambre (44) du corps de carter (35) assurant une communication fluidique vers une deuxième et une troisième chambre (45, 46) du corps de carter (35) de telle sorte que le gaz d'échappement puisse s'écouler depuis la première chambre (44) dans la deuxième chambre (45) et/ou la troisième chambre (46) et de là, être décomprimé dans les environs.

16. Système d'échappement (4) selon la revendication 1, dans lequel ledit espace de montage (34) est défini par le cadre de motocyclette (1), le moteur (2) et la suspension de roue arrière (29).
